# EUROPEAN PATENT APPLICATION

(11) **EP 1 248 484 A1**
(43) Date of publication of application: **09.10.2002**
(21) Application number: 02004960.7
(22) Date of filing: 05.03.2002
(51) Int. Cl.: H04Q 7/38

(54) **Method and system for providing presence and location information of mobile devices to applications**

(30) Priority: 08.03.2001 US 803526
(71) Applicant: Openwave Systems Inc., Redwood City, CA 94063 (US)
(72) Inventor: Polychronidis, Vasilis, Bothell, WA 98021 (US); Xie, Weihong, Woodinville, WA 98072 (US); Hartmaier, Peter J., Woodinville, WA 98072 (US); Gleason III, Thomas Gerard, Huntington, NY 11743 (US); Hwang, Boon Chong, Redmond, WA 98053 (US)
(74) Representative: Jehle, Volker Armin

(57) **Abstract**

A mobile network presence and location (NPL) agent detects and gathers user presence and location information and provides a generic interface to applications which require the information. The NPL agent comprises a pull agent, a push agent, or both. The pull agent receives requests for presence or location information about mobile devices on a wireless network from remote applications over a computer network. In response, the pull agent sends corresponding requests to a remote entity, such as a Short Message Service Center (SMSC) associated with the wireless network, which queries the Home Location Register (HLR) of the wireless network for the requested information. The remote entity returns the requested information to the pull agent, which decodes it and subsequently provides the information to the remote applications. The push agent publishes presence or location information to applications without requiring applications to request the information.

## Description

### FIELD OF THE INVENTION

The present invention pertains to techniques for accessing presence and location information associated with processing devices on a network. More particularly, the present invention relates to techniques for accessing presence and location information associated with mobile devices on a wireless network.

### BACKGROUND OF THE INVENTION

In wireless communications and computer networks, user presence and location information is often vital. User "presence" refers to whether a user is currently on-line, while user "location" refers to the user's geographic location. User presence and location information is essential for many applications, such as instant messaging and user-specific traffic alert applications.

In wireless (e.g., cellular) telephone networks, it is normally possible to obtain presence and location information from user's telephone handsets. However, doing so requires special software and/or hardware to be included in the handsets for that purpose. For example, a Global Positioning System (GPS) location device can be included within a mobile telephone handset, which can be used to provide user location information to remote applications. However, including location capability such as this in a handset can undesirably increase the size, complexity, and cost of the handset.

In some wireless telephone networks, the location of a mobile user is determined when a user dials an emergency number, e.g."911", from a mobile handset. However, acquisition of user location information using this approach is limited to emergencies. Furthermore, it is undesirable to require additional keystrokes or other actions by the user in order to provide applications with user presence or location information.

### SUMMARY OF THE INVENTION

The present invention includes a network presence and location agent which acquires presence and location information about multiple mobile devices operating on a wireless network from an entity on the wireless network other than the mobile devices, and which provides the acquired presence and location information to remote applications which use the information on a computer network.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 is a high level block diagram showing how an NPL agent may be employed in a network environment;
Figure 2 shows in greater detail an environment in which the NPL agent may be used;
Figure 3 is a high-level block diagram of a computer system which may embody a gateway server;
Figure 4 shows a logical overview of the NPL agent and its components;
Figure 5 shows a message flow for a retrieval of presence/location information in response to a request from an application;
Figure 6 shows a message flow for presence/location notification;
Figure 7 shows a message flow for user registration;
Figure 8 shows a message flow for user deregistration;
Figure 9 is a high level block diagram showing how a SIP NPL agent may be employed in connection with an IP network;
Figure 10 shows a message flow for user registration, for a SIP based embodiment; and
Figure 11 shows a message flow for retrieval of presence/location information in response to a request from an application, for a SIP based embodiment.

### DETAILED DESCRIPTION

A Network Presence and Location (NPL) agent is described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

For the reasons mentioned above, it is desirable to provide user presence and location information to applications which require such information, from a source other than the mobile (wireless) devices. Accordingly, as described in detail below, an NPL agent may be used to acquire user presence and location information from a wireless network and to provide such information to applications which require or otherwise use the information. Note that the terms "mobile" and "wireless" are used interchangeably in this document in various instances, as will be recognized by those skilled in the art.

Obtaining presence and location information from the wireless network avoids the need to equip user handsets with special software or hardware (e.g., GPS capability), and the information is available on most wireless networks. In addition, the techniques described herein do not require additional keystrokes or other actions by the user to provide presence or location information to applications, and are not limited to emergency situations.

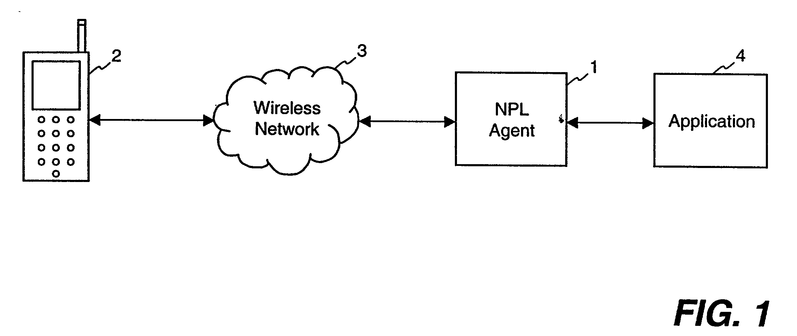

Figure 1 shows, at a high level, how the NPL agent may be employed. The NPL agent 1 detects and gathers user presence and/or location information about a mobile device 2 from a Signaling System 7 (SS7) based wireless network 3 and provides the information to an application 4 which needs the information. The application 4 might be, for example, an instant messaging application or a real-time traffic advisory application. The NPL agent 1 provides a generic interface to the application 4, so as to make the underlying detection techniques and network differences transparent to the application 4. In one embodiment, the generic interface between the NPL agent 1 and the application 4 is provided by communicating information in extensible markup language (XML) over Hypertext Transport Protocol (HTTP) and Transmission Control Protocol /Internet Protocol (TCP/IP). SS7 and TCP/IP can be used between the wireless network 3 and the mobile device 2 and between the NPL agent 1 and the wireless network 3.

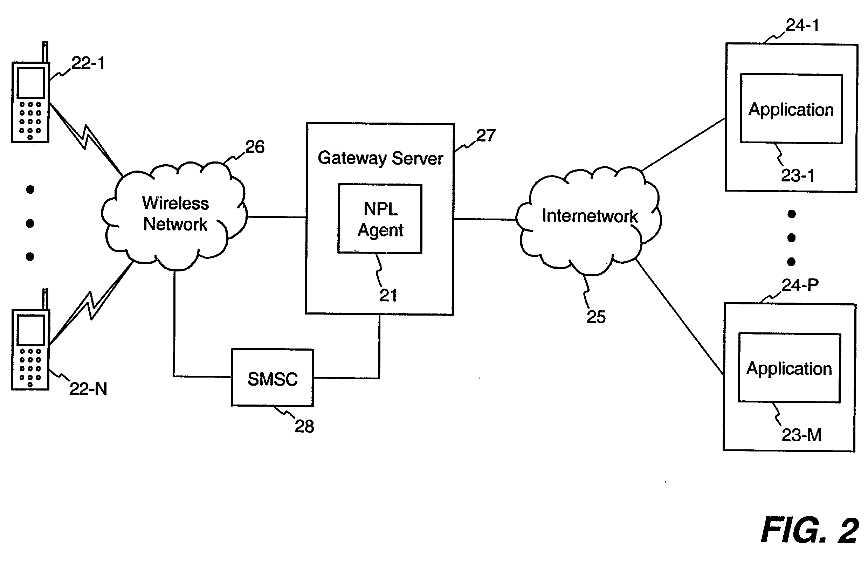

Figure 2 illustrates in greater detail an environment in which such an NPL agent may be used. As shown, the NPL agent 21 in Figure 2 may be used to acquire location and presence information about a number (N) of mobile devices 22-1 through 22-N. The NPL agent may be asked by any of a number (M) of applications 23-1 through 23-M to gather information about specific users, or it may receive information directly from the service provider's network 26 when a mobile user registers or deregisters on the network. Presence and/or location information retrieved from the wireless network 26 is decoded by the NPL agent and passed on to the interested applications.

Each of the mobile devices 22 may be, for example, a cellular telephone, personal digital assistant (PDA), a portable personal computer (PC), or a two-way pager. The applications 23 may be implemented in a number (P) of computer systems 24-1 through 24-P connected to a network or internetwork (hereinafter simply "network") 25, which is separate from the wireless (SS7) network 26. The network 25 may be, for example, the Internet. Accordingly, some or all of the applications 23 may be World Wide Web based applications, for example. Network 25 may also be or include one or more campus intranets, Local Area Networks (LANs), Wide Area Networks (WANs), or a combination thereof.

As shown in Figure 2, the NPL agent 21 may be implemented within a server computer system 27 that acts as a gateway between the network 25 and the wireless network 26, i.e. within "gateway server" 27. Gateway servers which connect wireless networks to the Internet are well known in the art. Such gateway servers have been used, among other things, to facilitate access by mobile devices such as cellular telephones to the World Wide Web. For example, a gateway server capable of supporting these functions can be implemented by using the UP.Link Server software, available from Openwave Systems of Redwood City, California, with conventional server computer hardware.

As noted above, communication between the NPL agent 21 and the applications 23 may be performed by using XML over HTTP and TCP/IP. In addition, in one embodiment the NPL agent 21 communicates with the wireless network 26 using XML over Short Message Peer to Peer Protocol (SMPP). In particular, as described further below, the NPL agent 21 may communicate with a Short Message Service Center (SMSC) 28 using XML over SMPP, while the SMSC 28 uses SS7 to communicate with the mobile devices 22 via the wireless network 26.

Of course, it is possible to use other protocols for communication between the wireless network 26 and the NPL agent 21. For instance, rather than communicating with the wireless network 26 through the SMSC 28, the NPL agent 21 may communicate directly with the wireless network 26 using XML over SS7 (as shown in Figure 2). As another example, TCP/IP may be used to connect to some of the network nodes directly. Similarly, Session Initiation Protocol (SIP) may be used, as described further below.

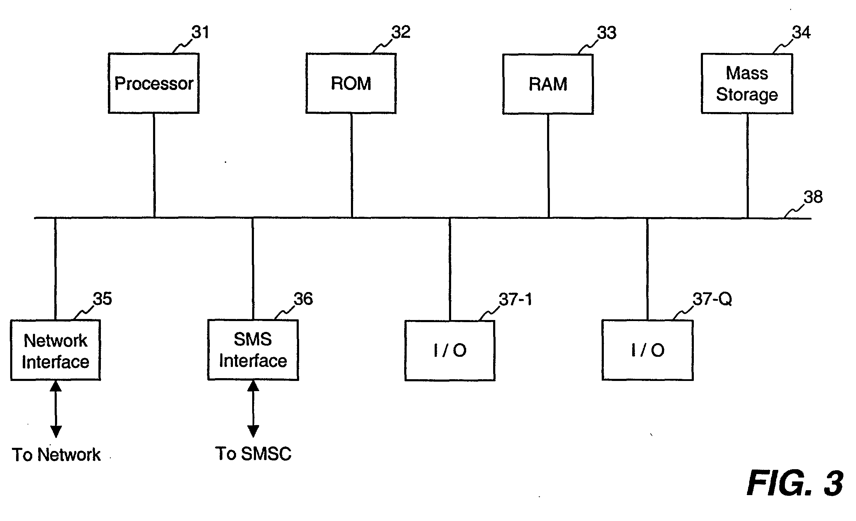

Figure 3 shows, at a high-level, an example of the structure of a processing system representative of the gateway server 27, according to one embodiment. Note that the illustrated structure may also be representative of some or all of the other processing systems shown in Figures 1 and 2, such as the computer systems 24 in which the presence/location based applications 23 are implemented. The processing system shown in Figure 3 includes a processor 31, read-only memory (ROM) 32, and random access memory (RAM) 33, each connected to a bus system 38. The bus system 38 may include one or more buses connected to each other through various bridges, controllers and/or adapters, such as are well-known in the art. For example, the bus system 38 may include a "system bus" that is connected through an adapter to one or more expansion buses, such as a Peripheral Component Interconnect (PCI) bus. Also coupled to the bus system 38 are a mass storage device 34, a network interface 35, a Short Message Service (SMS) interface 36 (in the case of the gateway server 27), and if desired, a number (Q) of input/output (I/O) devices 37-1 through 37-Q. Note, however, that a server computer does not necessarily require I/O devices that are designed to interface directly with a user. Nonetheless, I/O devices 37 could include a keyboard, a pointing device, a display device, and/or any other conventional I/O devices.

Mass storage device 34 may include any suitable device for storing large volumes of data, such as a magnetic disk or tape, magneto-optical (MO) storage device, or any of various types of Digital Versatile Disk (DVD) or Compact Disk (CD) based storage. Network interface 35 provides data communication between the computer system and other, remote computer systems. Hence, network interface 35 may be, for example, a conventional telephone modem, an Integrated Services Digital Network (ISDN) adapter, a Digital Subscriber Line (DSL) modem, a cable modem, a satellite transceiver, an Ethernet adapter, or a combination thereof. Similarly, SMS interface 36 provides SMS data communication between the computer system and a remote SMSC, as described below. SMS 36 may be the same or a similar type of device as network interface 35, and in fact, SMS interface 36 and network interface 35 may be implemented as a single device.

Of course, many variations upon the architecture shown in Figure 3 can be made to suit the needs of a particular machine. Thus, certain components may be added to those shown in Figure 3 for a particular machine, or certain components shown in Figure 3 may be omitted from a particular machine.

Note that many of the features of the NPL agent and other features described herein may be implemented in software, as will be recognized by those skilled in the art. That is, the described operations may be carried out in a processing system in response to its processor executing sequences of instructions contained in memory. The instructions may be executed from a memory, such as RAM, and may be loaded from a persistent store, such as a mass storage device and/or from one or more remote computer systems (i.e., a "host" computer system). Alternatively, or in addition, special-purpose hardwired circuitry may be used to implement the features described herein. Thus, the present invention is not limited to any specific combination of hardware and software, nor to any particular source for the instructions in the case of software.

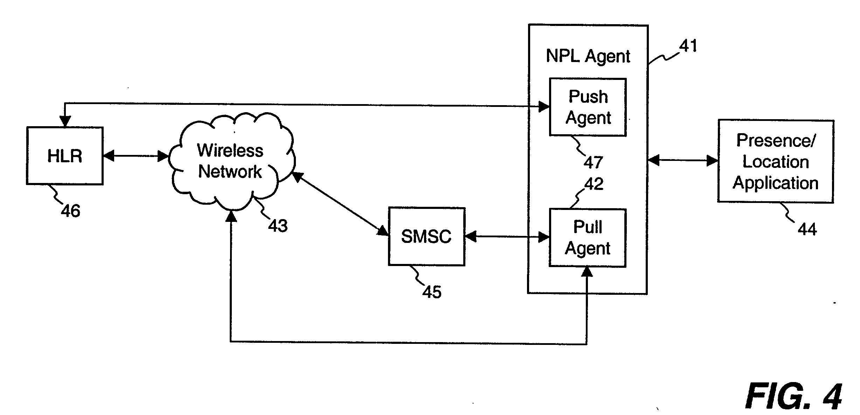

Figure 4 gives a logical overview of the Mobile NPL agent and its components, according to one embodiment. In the illustrated embodiment, the NPL agent 41 includes a "pull agent" 42 and a "push agent" 47. Note, however, that it is not essential that an NPL agent include both a pull agent and a push agent, as herein described. The pull agent 42 receives requests for presence or location information about mobile devices on the wireless (SS7) network 43 from remote applications 44. In response, the pull agent 42 sends corresponding requests to an SMSC 45 associated with the wireless network 43. The SMSC 45 queries the wireless service provider's Home Location Register (HLR) 46 for the requested presence or location information via the wireless network 43, and returns the requested information to the pull agent 42, which decodes the information and provides it to the remote applications 44.

In one embodiment, communications between the various entities are carried out as follows: Communication between the HLR 46 and the wireless network 43 is by SS7 protocol; communication between the wireless network 43 and the SMSC 45 is by XML or Mobile Application Part (MAP) over SS7; communication between the pull agent 42 and the remote applications 44 is by XML over HTTP and TCP/IP; and, communication between the pull agent 42 and the SMSC 45 is by XML over SMPP. Alternatively, or in addition to the foregoing, the pull agent 42 may communicate directly with the wireless network 43 using, for example, XML over SS7 protocol.

The pull agent 42 accepts queries for presence/location information from the interested application 44. The application 44 indicates the type of information required, such as mobile presence, location, or both, by selecting the appropriate probe operation supported by the pull agent 42. The pull agent 42 processes the queries by sending SMPP Submit Request messages via the SMSC 45 to the wireless service provider's HLR 46. Presence and/or location information is received via the wireless network 43 by the SMSC 45 and forwarded back to the pull agent 42 by an SMPP Delivery Message. The pull agent 42 decodes the SMPP messages and publishes the information requested back to the applications 44.

In addition, the pull agent 42 may receive a registration notification from the wireless service provider's HLR 46 when a user registers on the wireless network after having been absent (e.g., when a user turns on his mobile handset). The information is received via the wireless network 43 by the SMSC 45 and forwarded to the pull agent 42 by an SMPP Alert Message. The pull agent 42 decodes the SMPP message and publishes the information to the applications 44.

The push agent 47 publishes presence or location information to applications 44 without requiring applications 44 to request the information. The push agent 47 relies on the wireless service provider's HLR/ Mobile Switching Center (MSC) to proactively push notification of the user's registration or deregistration via the wireless network 43. In one embodiment, the presence/location information is pushed to the push agent 47 via TCP/IP in the form of a Serving System Message according to J-STD-025 (TIA/ATIS Internet Standard, "Lawfully Authorized Electronic Surveillance", December 1997). Alternatively, XML over TCP/IP may be used. The push agent 47 is also capable of handling other types of messages which contain the user presence and location information from the wireless network via TCP/IP. The messages are decoded by the push agent 47, and the presence/location information is published to the applications using XML over HTTP and TCP/IP.

As shown above, the pull agent 42 communicates with the wireless network 43 through the SMSC 45. An SMSC is a well-known server process that provides SMS for mobile users. An SMSC is well-suited for providing user presence and location information, as it already performs similar logic while managing short messages. For instance, an SMSC detects user presence status so that it can either store or forward the short message for the users.

Additional features are added to the SMSC for querying user presence and location information, as described below. The SMSC is responsible for detecting the underlying network and sending the relevant network messages to fulfill queries from the NPL agent.

In one embodiment, the pull agent 42 communicates with the SMSC 45 using SMPP, as already noted. SMPP is a standard protocol that enables Short Message Entities (SMEs) outside a mobile network to interface with an SMSC. In one embodiment, SMPP version 3.4 is chosen, as it allows custom enhancement by using optional parameters. The following enhancements to SMPP can be used to provide presence and location queries and information.
- New service types for presence and location queries are added to the SUBMIT_SM operation request
- Message state in DELIVER_SM is encoded with presence information
- Message payload in DELIVER_SM is encoded with XML format for location information
- MS Availability Status in ALERT_NOTIFICATION is encoded with presence update information

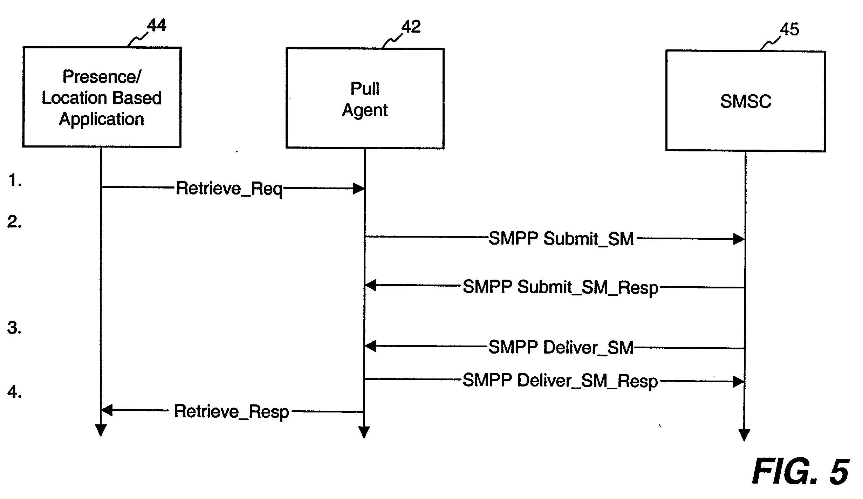

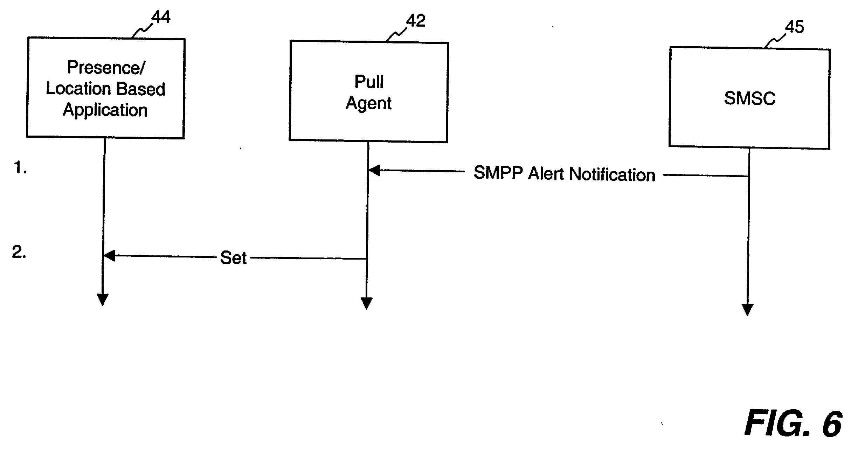

The interaction between the pull agent 42, the application 44, and the SMSC 45 will now be described with reference to Figures 5 and 6. A first message flow is for a Presence/Location Retrieve Request, which is the probe for a user's presence and/or location information on the service provider's network. The request is originated from the application 44 and passed to the pull agent 42. The pull agent 42 is responsible for retrieving the information and passing the response back to the requesting application 44. Referring to Figure 5, the process is as follows:
1. The application 44 requests presence/location information from the pull agent 42 regarding a user. The pull agent 42 uses the user identity and probe type included in the request to obtain the appropriate information from the service provider's network. The requesting application 44 will wait for the pull agent 42 to provide the information before ending the transaction.
2. The pull agent 42 sends an SMPP Submit_SM request to the SMSC 45. The pull agent 42 receives an SMPP Submit_SM_Resp response message from the SMSC 45 on successful receipt of the Submit_SM request by the SMSC 45. The SMSC 45 will process the request by interpreting the
3. service type in the message and determining the correct sequence of protocol specific messages to send to the service provider's network.
4. The SMSC 45 receives the presence and/or location information from the service provider's network and forwards it to the pull agent 42 in the form of an SMPP Deliver_SM message. The pull agent 42 acknowledges the receipt of the message with the SMPP Deliver_SM_Resp acknowledgement to the SMSC 45.
5. The pull agent 42 matches the results to the original request and publishes the requested information to the requesting application 44, ending the transaction.

Another type of message flow relates to the notification of a user's registration on the service provider's network. This notification is the result of a previous probe operation performed by the pull agent 42 on behalf of the application 44, where the pull agent 42 requested to be notified of status change when the result of the probe yields a mobile status of OPEN/ON. Since the original application request has already been resolved, the notification cannot be passed back to the application 44 in the same transaction. Accordingly, the pull agent 42 will publish the information to the application 44 in a separate transaction. This process, as shown in Figure 6, is as follows:
1. The SMSC 45 receives notification from the service provider's network that the status for a user has changed. The notification is passed to the pull agent 42 in the form of an SMPP Alert Notification.
2. The pull agent 42 decodes the message and publishes the presence and/or location information to the application 44.

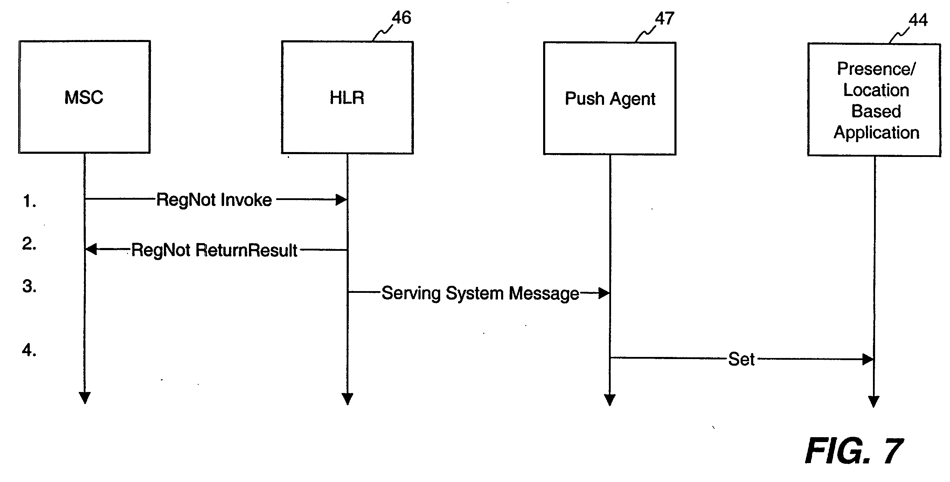

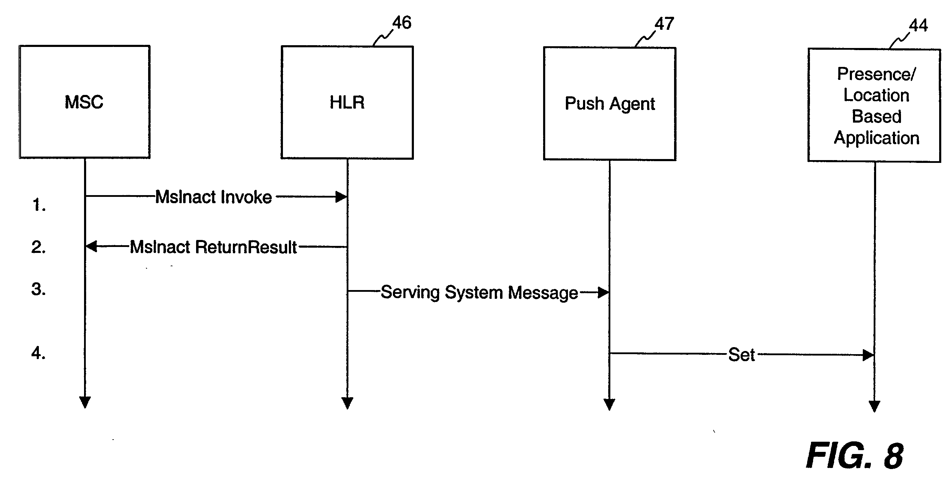

The interaction between the service provider's network, the push agent and the presence/location based applications will now be described with reference to Figures 7 and 8. In the case of user registration, a J-STD-025 Serving System Message will be generated by the HLR 46 when the service provider's MSC issues a RegistrationNotification message for a mobile user. The presence/location information will be published to the application 44. The process, as shown in Figure 7, is as follows:
1. The service provider's MSC detects the registration of the mobile user on the network. It sends a RegistrationNotification Invoke message to the HLR 46.
2. The HLR 46 acknowledges the successful receipt of the message.
3. The HLR 46 sends a Serving System Message to the push agent 47. The push agent 47 decodes the message and determines the status of the mobile user.
4. The push agent 47 publishes the presence/location information to the application 44.

In the case of user deregistration, a J-STD-025 Serving System Message will be generated by the HLR 46 when the MSC issues a MobileStationInactive message for a mobile device. The presence/location information will be published to the application 44. The process, as shown in Figure 8, is as follows:
1. The service provider's MSC detects the deregistration of the mobile user on the network. It sends an MsInactive Invoke message to the HLR 46.
2. The HLR 46 acknowledges the successful receipt of the message.
3. The HLR 46 sends a Serving System Message to the push agent 47. The push agent 47 decodes the message and determines the status of the mobile user.
4. The push agent 47 publishes the presence and/or location information to the application 44.

As already mentioned, an NPL agent as described herein publishes a generic application interface for any presence/location based application to either retrieve or receive user presence/location information. In one embodiment, the interface is based on XML over HTTP, as noted above. XML is used to encode the presence/location information so that it is easy for applications to understand and decode the data. HTTP is used to transfer the XML data because it is an open and generic transport protocol and is ubiquitous in many Internet applications. The following XML Document Type Definition (DTD) defines an example of the presence/location format exchanged between the NPL agent and the presence/location based applications. Note that the presence/location information is presented in a generic format, so that it can be applied not only for mobile users, but also for PC users, PDA users, etc.

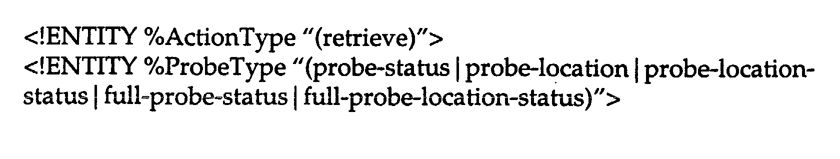

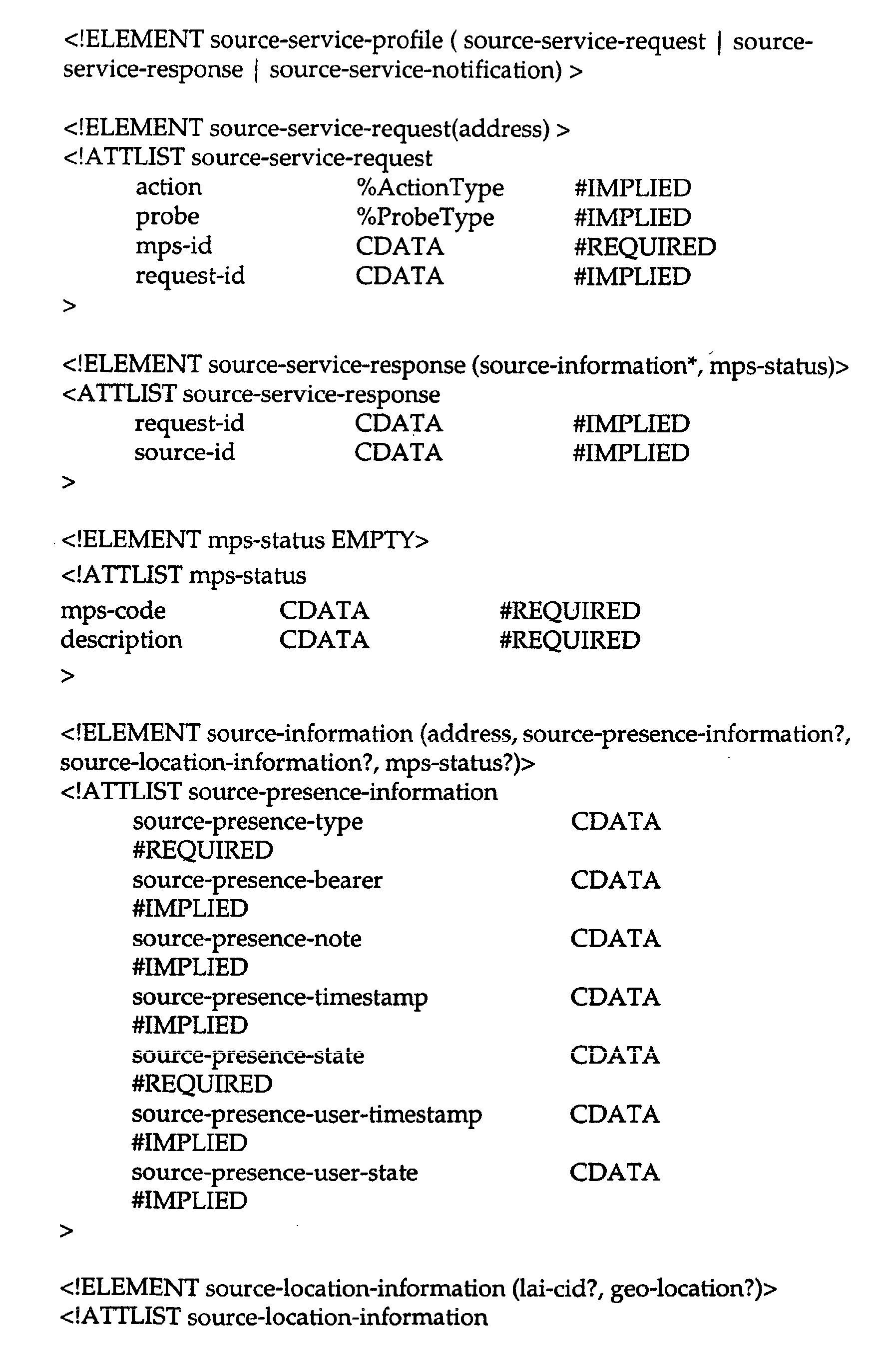

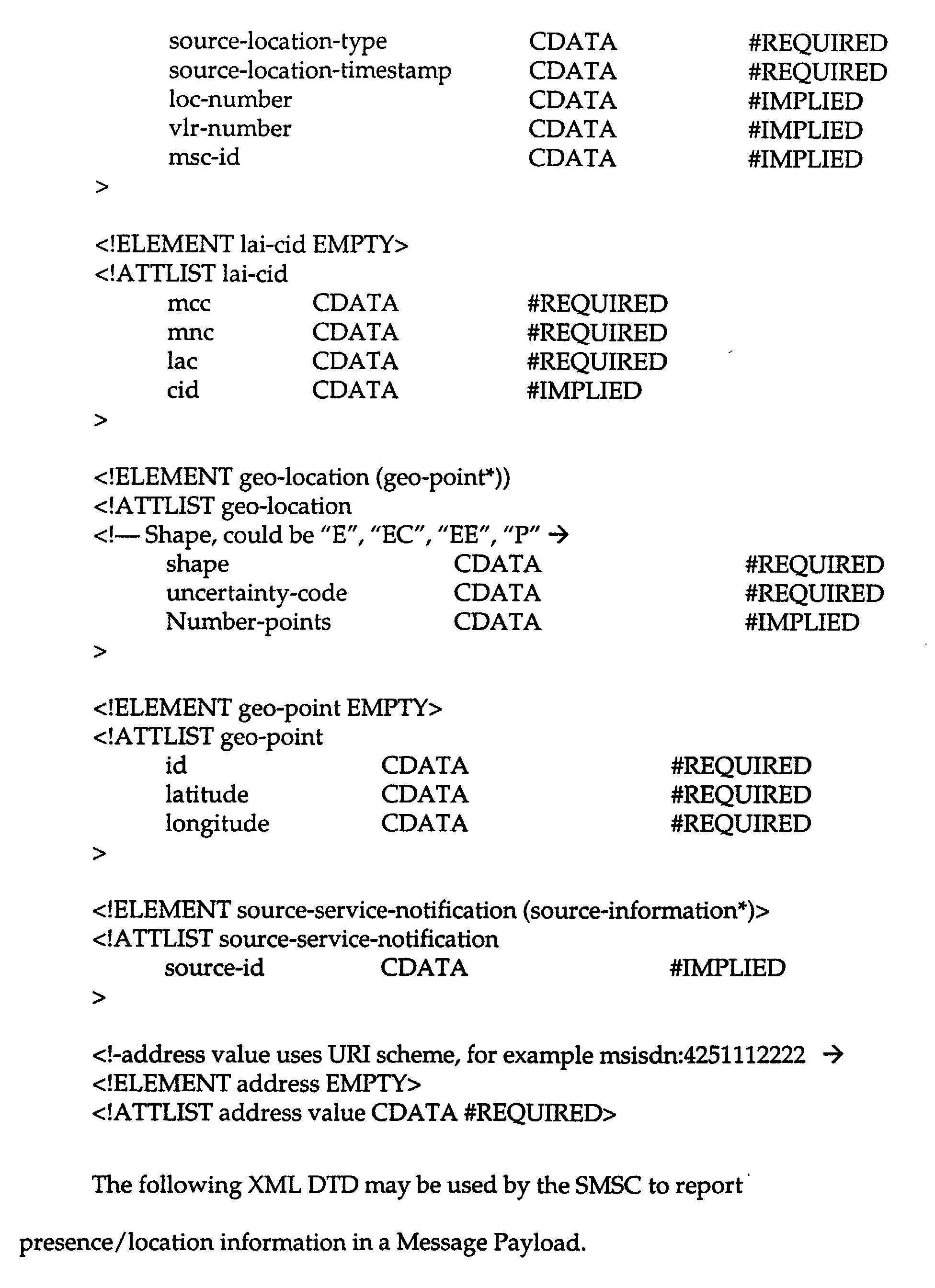

The following XML DTD may be used by the SMSC to report presence/location information in a Message Payload.

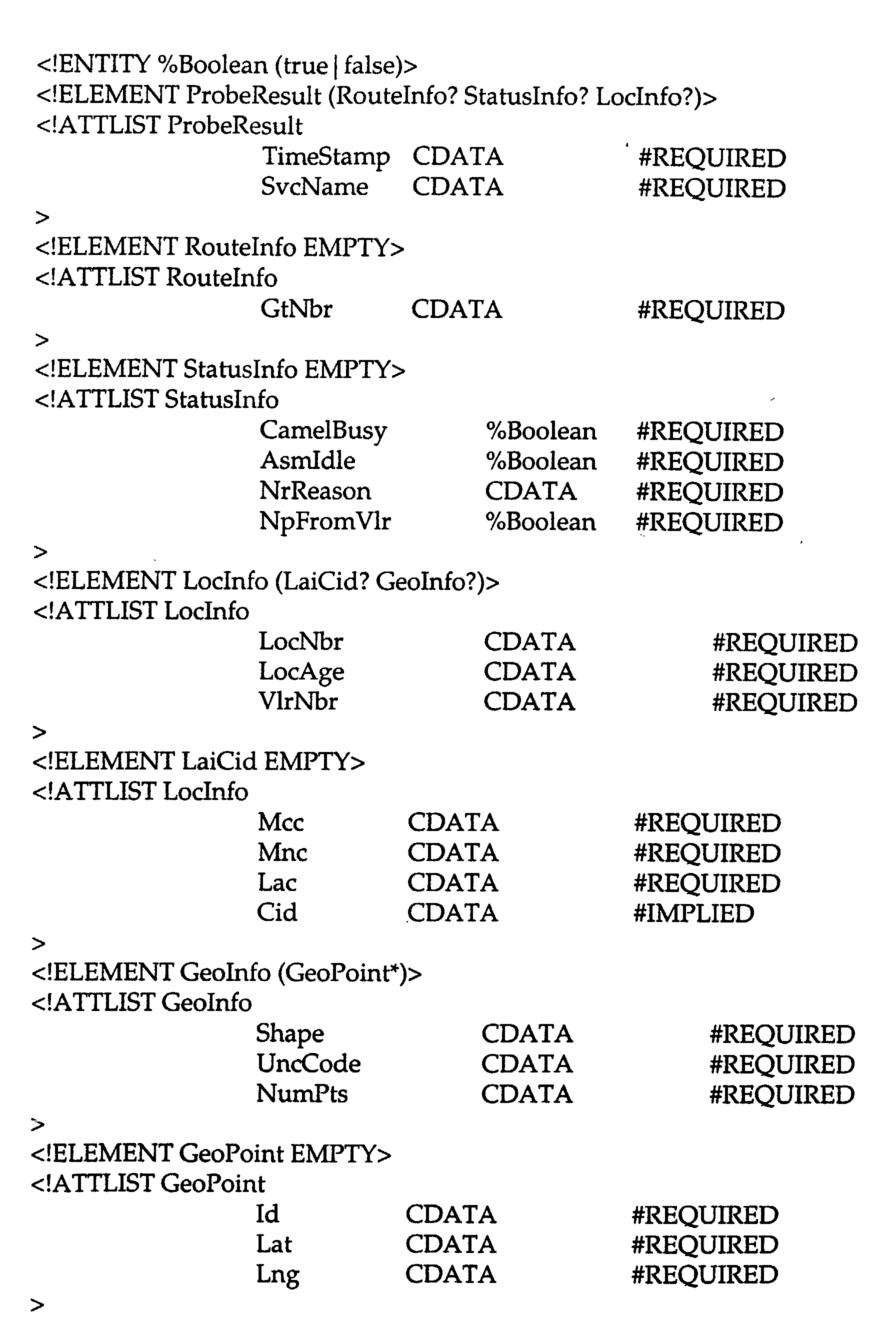

As noted above, certain features are added to the SMSC for the purpose of querying user presence and location information, as will now be described. The SMSC will support probe services via the SMPP interface for presence and location determination. The SMSC may be either an SMS server or an intervening SME gateway that is connected to one or more SMS servers. Service types are defined for all combinations of status, routing, delivery, and location operations. Although different network technologies involve different sequences of operations, the results are operationally equivalent.

Below are examples of state table descriptions for the probe services for two illustrative network technologies: 1) Time Division Multiple Access (TDMA) using the "IS-41" protocol (as defined in TIA/EIA-41-D), and 2) Global System for Mobile-Communications (GSM) using GSM MAP.

Tables 1 and 2 set forth definitions which apply to the state tables below. In particular, Table 1 defines the possible events, while Table 2 defines the possible actions. For those actions and events which are followed by parentheses "( )", the term enclosed within the parentheses in the following state tables indicates the content or nature of the event or action.

**Table 1.**

| SMSC Events | |
|---|---|
| Event | Meaning |
| MsgExpired | Validity period of message has expired |
| MsgDelete | Message was deleted |
| OprTimeout | Operation timer has expired |
| OprRetry | Operation failed but can be retried |
| OprReject | A non-retriable operation failure occurred |
| SMPPSubmit | An SMPP message was submitted to the SMSC |
| SMSReqResult() | Result has been received from an SMS Request invoke |
| SMSNotif() | Network notification of subscriber available |
| SMSDlvResult() | Result has been received from an SMS Deliver invoke |
| SRIResult() invoke | Result has been received from a Send Routing Information |
| RDSResult() invoke | Result has been received from a Request Delivery Status |
| SCAlert | Network notification of subscriber available |
| FSMResult() invoke | Result has been received from a Forward Short Message |
| ATIResult() invoke | Result has been received from an Any Time Interrogation |

**Table 2.**

| SMSC Actions | |
|---|---|
| Action | Meaning |
| SMSReqInvoke | Invoke an SMS Request operation |
| SMSDlvInvoke | Invoke an SMS Deliver operation |
| SRIInvoke | Invoke a Send Routing Information operation |
| RDSInvoke | Invoke a Request Delivery Status operation |
| FSMInvoke | Invoke a Forward Short Message operation |
| ATIInvoke | Invoke an Any Time Interrogation operation |
| SMPPDlvRpt() | Send an SMPP Delivery Report to requestor |
| SMPPAlert() | Send an SMPP Alert Notification to requestor |
| SetOprTimer | Set a configurable retry timer. |

Tables 3 through 5 are state tables that apply to an SMSC implementing TDMA with IS-41 protocol. A separate state table is provided for each of the following three SMSC methods: route only (Table 3), route and deliver (Table 4), and status only (Table 5).

With respect to the SMSC's interactions with the NPL agent, note, for example, in Table 4, the event SMSDivResult(SUCCESS) and its corresponding action SMPPDivRpt(DELIVERED) when in the SMSDLV state. This event-action pair corresponds to the delivery of location and/or presence information to the NPL agent in response to a query.

**Table 3.**

| IS-41 Probe Method 1: Route Only | | |
|---|---|---|
| Event | Action | Next-State |
| State - IDLE | | |
| SMPPSubmit | SMSReqInvoke | SMSREQ |
| State - SMSREQ (SMS Request operation invoked) | | |
| MsgExpired | SMPPDlvRpt(EXFIRED) | IDLE |
| MsgDelete | SMPPDlvRpt(DELETED) | IDLE |
| OprTimeout | SMSReqInvoke | SMSREQ |
| OprRetry | SMSReqInvoke | SMSREQ |
| OprReject | SMPPDlvRpt(REJECT) | IDLE |
| SMSReqResult(SUCCESS) | SMPPDlvRpt(DELIVERED) | IDLE |
| SMSReqResult(POSTPONED) | SMPPDlvRpt(ENROUTE) | WAITNTF |
| SMSReqResult(DENIED) | SMPPDlvRpt(REJECT) | IDLE |
| SMSReqResult(UNAVAIL) | SMPPDlvRpt(REJECT) | IDLE |
| SMPPSubmit | Discard | SMSREQ |
| | | |
| State - WAITNTF (Wait for Notification) | | |
| MsgExpired | SMPPDlvRpt(EXPIRED) | IDLE |
| MsgDelete | SMPPDlvRpt(DELETED) | IDLE |
| OprTimeout | SMSReqInvoke | SMSREQ |
| SMSNotif(SUCCESS) | SMPPAlert(SUCCESS) | IDLE |
| SMSNotif(POSTPONED) | SetOprTimer | WAITNTF |
| SMSNotif(DENIED) | SMPPDlvRpt(REJECT) | IDLE |
| SMSNotif(UNAVAIL) | SMPPDlvRpt(REJECT) | IDLE |
| SMPPSubmit | SMSReqInvoke | SMSREQ (1) |

| | | |
|---|---|---|
| Note: (1) Replace and start over | | |

**Table 4.**

| IS-41 Probe Method 2: Route and Deliver | |
|---|---|
| Event | Action |
| Next-State | |
| | |
| State - IDLE | |
| SMPPSubmit | SMSReqInvoke |
| | SMSREQ |
| | |
| State - SMSREQ (SMS Request operation invoked) | |
| MsgExpired | SMPPDlvRpt(EXPIRED) |
| | IDLE |
| MsgDelete | SMPPDlvRpt(DELETED) |
| | IDLE |
| OprTimeout | SMSReqInvoke |
| | SMSREQ |
| OprRetry | SMSReqInvoke |
| | SMSREQ |
| OprReject | SMPPDlvRpt(REJECT) |
| | IDLE |
| SMSReqResult(SUCCESS) | SMPPDlvRpt(ENROUTE) + SMSDlvInvoke |
| | SMSDLV |
| SMSReqResult(POSTPONED) | SMPPDlvRpt(ENROUTE) |
| WAITNTF | |
| SMSReqResult(DENIED) | SMPPDlvRpt(REJECT) |
| | IDLE |
| SMSReqResult(UNAVAIL) | SMPPDlvRpt(REJECT) |
| | IDLE |
| SMPPSubmit | Discard |
| | SMSREQ |
| | |
| State - SMSDLV (SMS Deliver operation invoked) | |
| MsgExpired | SMPPDlvRpt(EXPIRED) |
| | IDLE |
| MsgDelete | SMPPDlvRpt(DELETED) |
| | IDLE |
| OprTimeout | SMSDlvInvoke |
| | SMSDLV |
| OprRetry | SMSDlvInvoke |
| | SMSDLV |
| OprReject | SMPPDlvRpt(REJECT) |
| | IDLE |
| SMSDlvResult(SUCCESS) | SMPPDlvRpt(DELIVERED) |
| | IDLE |
| SMSDlvResult(RETRY) | SetOprTimer |
| | SMSDLV |
| SMSDlvResult(POSTPONED) | SMPPDlvRpt(ENROUTE) |
| WAITNTF | |
| SMSDlvResult(REJECT) | SMPPDlvRpt(REJECT) |
| | IDLE |
| SMPPSubmit | Discard |
| | SMSDLV |
| | |
| State - WAITNTF (Wait for Notification)) | |
| MsgExpired | SMPPDlvRpt(EXPIRED) |
| | IDLE |
| MsgDelete | SMFPDlvRpt(DELETED) |
| | IDLE |
| OprTimeout | SMSReqInvoke |
| | SMSREQ |
| SMSNotif(SUCCESS) | SMFPAlert(SUCCESS) |
| | IDLE |
| SMSNotif(POSTPONED) | SetOprTimer |
| WAITNTF | |
| SMSNotif(DENIED) | SMPPDlvRpt(REJECT) |
| | IDLE |
| SMSNotif(UNAVAIL) | SMPPDlvRpt(REJECT) |
| | IDLE |
| SMPPSubmit | SMSReqInvoke |
| | SMSREQ |

**Table 5.**

| IS-41 Probe Method 3: Status Only | | |
|---|---|---|
| Event | Action | Next-State |
| State - IDLE | | |
| SMPPSubmit | SMSReqInvoke | SMSREQ |
| | | |
| State - SMSREQ (SMS Request operation invoked) | | |
| MsgExpired | SMPPDlvRpt(EXPIRED) | IDLE |
| MsgDelete | SMPPDlvRpt(DELETED) | IDLE |
| OprTimeout | SMSReqInvoke | SMSREQ |
| OprRetry | SMSReqInvoke | SMSREQ |
| OprReject | SMPPDlvRpt(REJECT) | IDLE |
| SMSReqResult(SUCCESS) | SMPPDlvRpt(DELIVERED) | IDLE |
| SMSReqResult(POSTPONED) | SMPPDlvRpt(ENROUTE) | IDLE |
| SMSReqResult(DENIED) | SMPPDlvRpt(REJECT) | IDLE |
| SMSReqResult(UNAVAIL) | SMPPDlvRpt(REJECT) | IDLE |
| SMPPSubmit | Discard | SMSREQ |

Tables 6 through 10 below apply to an SMSC implementing GSM. A state table is provided for each of the following five SMSC methods: route only (Table 6); route and deliver (Table 7); location and status (Table 8); route, location, and status (Table 9); and, route, location, status, and deliver (Table 10).

**Table 6.**

| GSM Probe Method 1: Route Only | | |
|---|---|---|
| Event | Action | Next-State |
| | | |
| State - IDLE | | |
| SMPPSubmit | SRIInvoke | SRI |
| | | |
| State - SRI (Send Routing Information operation invoked) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| OprRetry | SRIInvoke | SRI |
| OprReject | SMPPDlvRpt(REJECT) | IDLE |
| SRIResult(SUCCESS) | SMPPDlvRpt(DELIVERED) | IDLE |
| SRIResult(ABSENT) | SMPPDlvRpt(ENROUTE) +RDSInvoke | RDS |
| SRIResult(RETRY) | SetOprTimer | SRI |
| SRIResult(REJECT) | SMPPDlvRpt(REJECT) | IDLE |
| SMPPSubmit | Discard | SRI |
| | | |
| State - RDS (Request Delivery Status operation invoked) | | |
| MsgExpired | SMPPDlvRpt(EXPIRED) | IDLE |
| MsgDelete | SMPPDlvRpt(DELETED) | IDLE |
| OprTimeout | RDSInvoke | RDS |
| OprRetry | RDSInvoke | RDS |
| OprReject | SMPPDlvRpt(REJECT) | IDLE |
| RDSResult(SUCCESS) | | ALR |
| RDSResult(OTHER) | SetOprTimer | SRI |
| SMPPSubmit | Discard | RDS |
| | | |
| State - ALR (Wait for Alert) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| SCAlert | SMPPAlert(SUCCESS) | IDLE |
| SMPPSubmit | SRIInvoke | SRI |

**Table 7.**

| GSM Probe Method 2: Route and Deliver | | |
|---|---|---|
| Event | Action | Next-State |
| | | |
| State - IDLE | | |
| SMPPSubmit | SRIInvoke | SRI |
| | | |
| State - SRI (Send Routing Information operation invoked) | | |
| MsgExpired | SMPPDlvRpt(EXPIRED) | IDLE |
| MsgDelete | SMPFDlvRpt(DELETED) | IDLE |
| OprTimeout | SRIInvoke | SRI |
| OprRetry | SRIInvoke | SRI |
| OprReject | SMPPDlvRpt(REJECT) | IDLE |
| SRIResult(SUCCESS) | SMPPDlvRpt(ENROUTE)+FSMInvoke | FSM |
| SRIResult(ABSENT) | SMPPDlvRpt(ENROUTE)+RDSInvoke | RDS |
| SRIResult(RETRY) | SetOprTimer | SRI |
| SRIResult(REJECT) | SMPPDlvRpt(REJECT) | IDLE |
| SMPPSubmit | Discard | SRI |
| | | |
| State - RDS (Request Delivery Status operation invoked) | | |
| MsgExpired | SMPPDlvRpt(EXPIRED) | IDLE |
| MsgDelete | SMPPDlvRpt(DELETED) | IDLE |
| OprTimeout | RDSInvoke | RDS |
| OprRetry | RDSInvoke | RDS |
| OprReject | SMPPDlvRpt(REJECT) | IDLE |
| RDSResult(SUCCESS) | | ALR |
| RDSResult(OTHER) | SetOprTimer | SRI |
| SMPPSubmit | Discard | RDS |
| | | |
| State - FSM (Forward Short Message operation invoked) | | |
| MsgExpired | SMPPDlvRpt(EXPIRED) | IDLE |
| MsgDelete | SMPPDlvRpt(DELETED) | IDLE |
| OprTimeout | FSMInvoke | FSM |
| OprRetry | FSMInvoke | FSM |
| OprReject | SMPPDlvRpt(REJECT) | IDLE |
| FSMResult(SUCCESS) | SMPPDlvRpt(DELIVERED) | IDLE |
| FSMResult(RETRY) | SetOprTimer | FSM |
| FSMResult(ABSENT) | SMPPDlvRpt(ENROUTE)+RDSInvoke | RDS |
| FSMResult(REJECT) | SMPPDlvRpt(REJECT) | IDLE |
| SMPPSubmit | Discard | FSM |
| | | |
| State - ALR (Wait for Alert) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| SCAlert | SMPPAlert(SUCCESS) | IDLE |
| SMPPSubmit | SRIInvoke | SRI |

**Table 8.**

| GSM Probe Method 3: Location and Status | | |
|---|---|---|
| Event | Action | Next-State |
| | | |
| State - IDLE | | |
| SMPPSubmit | ATIInvoke | ATI |
| | | |
| State - ATI (Any Time Interrogation operation invoked) | | |
| MsgExpired | SMPPDlvRpt(EXPIRED) | IDLE |
| MsgDelete | SMPPDlvRpt(DELETED) | IDLE |
| OprTimeout | ATIInvoke | ATI |
| OprRetry | ATIInvoke | ATI |
| OprReject | SMPPDlvRpt(REJECT) | IDLE |
| ATIResult(SUCCESS) | SMPPDlvRpt(DELIVERED) | IDLE |
| ATIResult(INACTIVE) | SMPPDlvRpt(UNDELIV) | IDLE |
| ATIResult(RETRY) | SetOprTimer | ATI |
| ATIResult(REJECT) | SMPPDlvRpt(REJECT) | IDLE |
| SMPPSubmit | Discard | ATI |

**Table 9.**

| GSM Probe Method 4: Route, Location and Status | | |
|---|---|---|
| Event | Action | Next-State |
| | | |
| State - IDLE | | |
| SMPPSubmit | ATIInvoke | ATI |
| | | |
| State - ATI (Any Time Interrogation operation invoked) | | |
| MsgExpired | SMPPDlvRpt(EXPIRED) | IDLE |
| MsgDelete | SMPPDlvRpt(DELETED) | IDLE |
| OprTimeout | ATIInvoke | ATI |
| OprRetry | ATIInvoke | ATI |
| OprReject | SMPPDlvRpt(REJECT) | IDLE |
| ATIResult(SUCCESS) | SMPPDlvRpt(DELIVERED) | IDLE |
| ATIResult(INACTIVE) | SMPPDlvRpt(ENROUTE)+SRIInvoke | SRI |
| ATIResult(RETRY) | SetOprTimer | ATI |
| ATIResult(REJECT) | SMPPDlvRpt(REJECT) | IDLE |
| SMPPSubmit | Discard | ATI |
| | | |
| State - SRI (Send Routing Information operation invoked) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| OprRetry | SRIInvoke | SRI |
| OprReject | SMPPDlvRpt(REJECT) | IDLE |
| SRIResult(SUCCESS) | SMPPDlvRpt(DELIVERED) | IDLE |
| SRIResult(ABSENT) | SMPPDlvRpt(ENROUTE)+RDSInvoke | RDS |
| SRIResult(RETRY) | SetOprTimer | SRI |
| SRIResult(REJECT) | SMPPDlvRpt(REJECT) | IDLE |
| SMPPSubmit | Discard | SRI |
| | | |
| State - RDS (Request Delivery Status operation invoked) | | |
| MsgExpired | SMPPDlvRpt(EXPIRED) | IDLE |
| MsgDelete | SMPPDlvRpt(DELETED) | IDLE |
| OprTimeout | RDSInvoke | RDS |
| OprRetry | RDSInvoke | RDS |
| OprReject | SMPPDlvRpt(REJECT) | IDLE |
| RDSResult(SUCCESS) | | ALR |
| RDSResult(OTHER) | SetOprTimer | SRI |
| SMPPSubmit | Discard | RDS |
| | | |
| State - ALR (Wait for Alert) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| SCAlert | SMPPAlert(SUCCESS) | IDLE |
| SMPPSubmit | ATIInvoke | ATI |

**Table 10.**

| GSM Probe Method 5: Route, Location, Status and Deliver | | |
|---|---|---|
| Event | Action | Next-State |
| | | |
| State - IDLE | | |
| SMPPSubmit | ATIInvoke | ATI |
| | | |
| State - ATI (Any Time Interrogation operation invoked) | | |
| MsgExpired | SMPPDlvRpt(EXPIRED) | IDLE |
| MsgDelete | SMPPDlvRpt(DELETED) | IDLE |
| OprTimeout | ATIInvoke | ATI |
| OprRetry | ATIInvoke | ATI |
| OprReject | SMPPDlvRpt(REJECT) | IDLE |
| ATIResult(SUCCESS) | SMPPDlvRpt(DELIVERED) | IDLE |
| ATIResult(INACTIVE) | SRIInvoke | SRI |
| ATIResult(RETRY) | SetOprTimer | ATI |
| ATIResult(REJECT) | SMPPDlvRpt(REJECT) | IDLE |
| SMPPSubmit | Discard | ATI |
| | | |
| State - SRI (Send Routing Information operation invoked) | | |
| MsgExpired | SMPPDlvRpt(EXPIRED) | IDLE |
| MsgDelete | SMPPDlvRpt(DELETED) | IDLE |
| OprTimeout | SRIInvoke | SRI |
| OprRetry | SRIInvoke | SRI |
| OprReject | SMPPDlvRpt(REJECT) | IDLE |
| SRIResult(SUCCESS) | FSMInvoke | FSM |
| SRIResult(ABSENT) | SMPPDlvRpt(ENROUTE)+RDSInvoke | RDS |
| SRIResult(RETRY) | SetOprTimer | SRI |
| SRIResult(REJECT) | SMPPDlvRpt(REJECT) | IDLE |
| SMPPSubmit | Discard | SRI |
| | | |
| State - RDS (Request Delivery Status operation invoked) | | |
| MsgExpired | SMPPDlvRpt(EXPIRED) | IDLE |
| MsgDelete | SMPPDlvRpt(DELETED) | IDLE |
| OprTimeout | RDSInvoke | RDS |
| OprRetry | RDSInvoke | RDS |
| OprReject | SMPPDlvRpt(REJECT) | IDLE |
| RDSResult(SUCCESS) | | ALR |
| RDSResult(OTHER) | SetOprTimer | SRI |
| SMPPSubmit | Discard | RDS |
| | | |
| State - FSM (Forward Short Message operation invoked) | | |
| MsgExpired | SMPPDlvRpt(EXPIRED) | IDLE |
| MsgDelete | SMPPDlvRpt(DELETED) | IDLE |
| OprTimeout | FSMInvoke | FSM |
| OprRetry | FSMInvoke | FSM |
| OprReject | SMPFDlvRpt(REJECT) | IDLE |
| FSMResult(RETRY) | SetOprTimer | FSM |
| FSMResult(SUCCESS) | SMPPDlvRpt(DELIVERED) | IDLE |
| FSMResult(ABSENT) | SMPPDlvRpt(ENROUTE)+RDSInvoke | RDS |
| FSMResult(REJECT) | SMPPDlvRpt(REJECT) | IDLE |
| SMPPSubmit | Discard | FSM |
| | | |
| State - ALR (Wait for Alert) IDLE | | |
| MsgDelete | SMPPDlvRpt(DELETED) | IDLE |
| MsgExpired | SMPPDlvRpt(EXPIRED) | IDLE |
| OprTimeout | SRIInvoke | SRI |
| SCAlert | SMPPAlert(SUCCESS) | IDLE |
| SMPPSubmit | ATIInvoke | ATI |

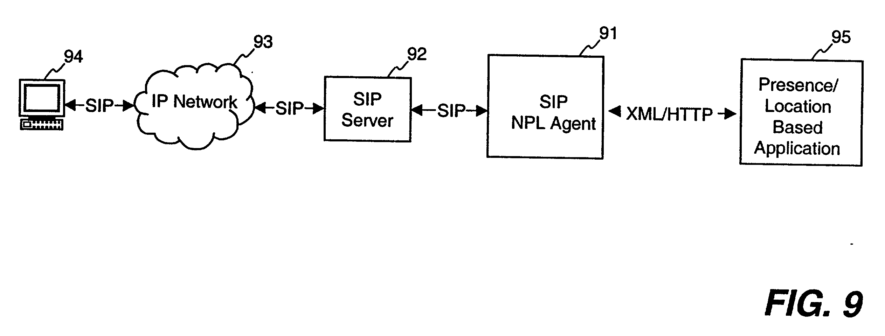

As noted above, an NPL agent may use SIP to acquire presence or location information, either alternatively or in addition to the above-described techniques. Hence, the NPL agent may be, or may include, a SIP NPL agent which supports SIP. Such an embodiment extends the capabilities of detecting user presence and location information to an IP network, as shown in Figure 9. Note that an NPL agent according to the present invention may include a SIP NPL agent and the above-described pull and push agents. Referring to Figure 9, the SIP NPL agent 91 is capable of sending SIP INVITE messages to the SIP servers 92 in the IP network 93 to query the current users' IP location addresses, whether the users' devices 94 are conventional (non-mobile) PCs, laptop PCs, PDAs, IP telephones, etc. In addition, the SIP NPL agent 91 is also capable of receiving SIP REGISTER messages from the SIP user agents to push the user IP location address information to the applications 95. Adding the support of SIP allows the user mobile and IP location address to be interchanged between a mobile network and the IP network.

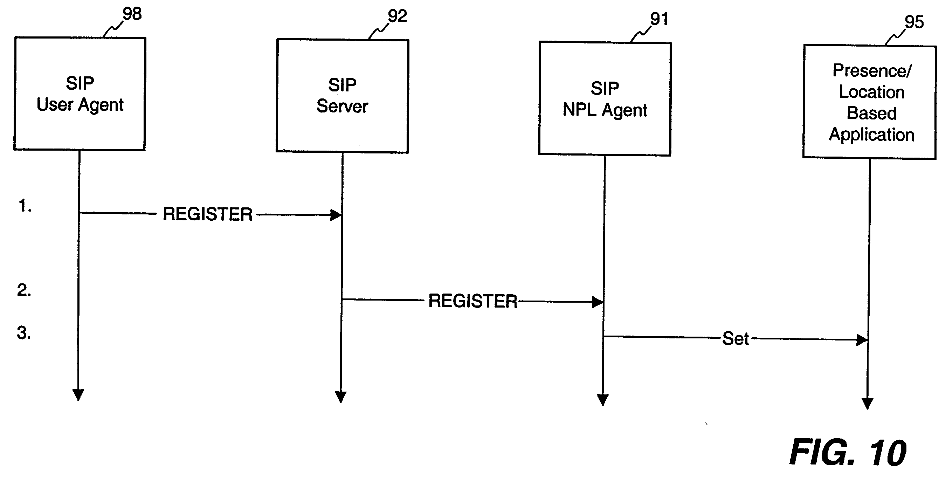

The message flows associated with an SIP NPL agent will now be described with reference to Figures 9 through 11. When a user registers on the IP network 93, the SIP user agent (not shown) of the user's processing device 94 will issue a REGISTER message that indicates the current user presence and location to the NPL agent 91. The NPL agent 91 will publish that information in XML format to any interested applications 95. Figure 10 shows the message flow between the SIP user agent, the SIP server, the NPL agent, and any applications, which is as follows:
1. When a user registers to the IP network 93, the SIP user agent 98 of the user's device sends a REGISTER message to the SIP server 92.
2. The SIP server 92 receives the REGISTER message, processes the message as it normally would, but also forwards the REGISTER message to the SIP NPL agent 91.
3. The SIP NPL agent 91 receives the REGISTER message, parses out the user presence and location information, and publishes the information to any interested applications 95 in XML format.

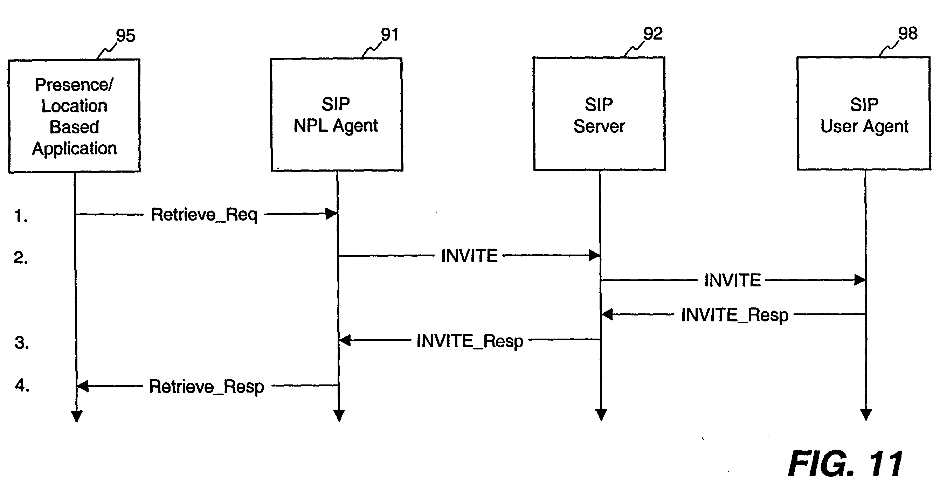

The SIP NPL agent 91 also supports the ability to query for presence or location information. Note that SIP provides an INVITE method to invite a user to join a session. In order for the session to be established, a SIP server needs to check the user presence and location information. Accordingly, the SIP NPL agent 91 uses the same INVITE method to query the network for user presence and location. Figure 11 shows the message flow between the SIP User agent, the SIP server, the SIP NPL agent and any applications, which is as follows:
1. The application 95 requests presence/location information from the SIP NPL agent 91 regarding a user. The SIP NPL agent 91 uses the user identity and probe type specified in the request to obtain the appropriate information from the network.
2. The SIP NPL agent 91 issues an SIP INVITE message to the SIP server 92, which in turn forwards the message to the relevant SIP user agent 98.
3. The SIP NPL agent 91 receives the response for the INVITE message from the SIP user agent 98 that has been forward by the SIP server 92.
4. The SIP NPL agent 91 derives the presence/location information from the INVITE response message and returns the information back in the

Retrieve Response message to the requesting application 95.

Thus, a wireless network presence and location agent has been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A server-based network presence and location agent which acquires presence and location information about a plurality of mobile devices operating on a wireless network from an entity on the wireless network other than the mobile devices, and which provides the acquired presence and location information to remote applications which use said information on a computer network.

2. A server-based network presence and location agent as recited in claim 1, wherein the network presence and location agent is configured to acquire the presence and location information in response to requests for said information from one or more of the remote applications.

3. A server-based network presence and location agent as recited in claim 1, wherein the network presence and location agent acquires the presence and location information independently of any requests for said information.

4. A server-based network presence and location agent as recited in claim 1, wherein the network presence and location agent receives the presence or location information in extensible markup language (XML) format using Short Message Peer to Peer Protocol (SMPP).

5. A server-based network presence and location agent as recited in claim 4, wherein the network presence and location agent receives the presence or location information using Short Message Peer to Peer Protocol (SMPP).

6. A server-based network presence and location agent as recited in claim 4, wherein the network presence and location agent provides the presence or location information to the remote applications in extensible markup language (XML) format using Hypertext Transport Protocol (HTTP).

7. A mobile network presence and location agent comprising:
a pull agent to receive a request from a remote application for presence or location information about a mobile device operating on a wireless network, and to send a corresponding request for the presence or location information to a Short Message Service Center (SMSC), such that the SMSC responds by querying a Home Location Register (HLR) of the wireless network to obtain the requested presence or location information, wherein the SMSC responds by providing the presence or location information to the pull agent, and wherein the pull agent subsequently provides the presence or location information to the remote application; and
a push agent to receive location or presence information about a mobile device operating on the wireless network from the HLR, wherein the presence or location information received by the push agent is not in response to a specific request for said information, and wherein the push agent subsequently provides the presence or location information to a remote application.

8. A mobile network presence and location agent as recited in claim 7, wherein the SMSC provides the presence or location information to the pull agent in extensible markup language (XML) format using Short Message Peer to Peer Protocol (SMPP).

9. A mobile network presence and location agent as recited in claim 7, wherein the pull agent subsequently provides the presence or location information to the remote application in XML format using Hypertext Transport Protocol (HTTP).

10. A mobile network presence and location agent as recited in claim 7, wherein:
the SMSC provides the presence or location information to the pull agent in extensible markup language (XML) format using Short Message Peer to Peer Protocol (SMPP); and
the pull agent subsequently provides the presence or location information to the remote application in XML format using Hypertext Transport Protocol (HTTP).

11. A mobile network presence and location agent as recited in claim 10, wherein the push agent provides the presence or location information to a remote application on the computer network in XML format using HTTP.

12. A mobile network presence and location agent as recited in claim 7, wherein the push agent communicates with the HLR according to J-STD-025.

13. A mobile network presence and location agent as recited in claim 7, further comprising a Session Initiation Protocol (SIP) agent to receive location or presence information about a processing device on a network from an SIP server, and to send the location or presence information about the processing device to a remote application on the computer network.

14. A mobile network presence and location agent as recited in claim 13, wherein the SIP agent sends the location or presence information to the remote application in XML format using Hypertext Transport Protocol (HTTP).

15. A mobile network presence and location agent as recited in claim 13, wherein the processing device is on an Internet Protocol (IP) based network.

16. A mobile network presence and location agent comprising:
a pull agent to receive a request for presence or location information about a mobile device from a remote application over a computer network, and to send a corresponding request for the presence or location information to a Short Message Service Center (SMSC), such that the SMSC responds by querying a Home Location Register (HLR) of a wireless network on which the mobile device operates to obtain the requested presence or location information, wherein the SMSC provides the presence or location information to the pull agent in extensible markup language (XML) format using Short Message Peer to Peer Protocol (SMPP), and wherein the pull agent subsequently provides the presence or location information to the remote application in extensible markup language (XML) format over the computer network using Hypertext Transport Protocol (HTTP), the presence or location information for use by the remote application; and
a push agent to receive location or presence information about a mobile device operating on the wireless network from the HLR, wherein the presence or location information received by the push agent is not in response to a specific request for said information, and wherein the push agent subsequently provides the presence or location information to a remote application over the computer network in XML format using HTTP.

17. A mobile network presence and location agent as recited in claim 16, further comprising a Session Initiation Protocol (SIP) agent to receive location or presence information about a processing device on an Internet Protocol (IP) based network from an SIP server, and to send the location or presence information about the processing device to a remote application in XML format using SMPP.

18. A mobile network presence and location agent as recited in claim 16, wherein the push agent communicates with the HLR according to J-STD-025.

19. A processing system comprising:
a processor;
a communications interface by which to communicate on a computer network;
a communications interface by which to communicate with a Short Message Service Center (SMSC); and
a storage facility storing instructions for execution by the processor, which instructions configure the processing system to:
receive a request for presence or location information about a mobile device operating on a wireless network from a remote application over a computer network;
send a corresponding request for the presence or location information to the SMSC, to cause the SMSC to query a Home Location Register (HLR) of the wireless network to obtain the requested presence or location information, wherein the presence or location information is received from the SMSC in extensible markup language (XML) format using Short Message Peer to Peer Protocol (SMPP); and
provide the received presence or location information to the remote application in XML format using Hypertext Transport Protocol (HTTP) over the computer network, the presence or location information for use by the remote application.

20. A processing system as recited in claim 19, wherein the instructions further configure the processing system to receive location or presence information about a mobile device operating on the wireless network from the HLR without having requested said information, and to subsequently provide the received presence or location information to a remote application over the computer network in XML format using HTTP.

21. A processing system as recited in claim 19, wherein the instructions further configure the processing system to receive location or presence information about a processing device on an Internet Protocol (IP) based network from a Session Initiation Protocol (SIP) server, and to send the location or presence information about the processing device to a remote application in XML format using HTTP.

22. A gateway server comprising:
a processor;
a communications interface by which to communicate with a packet-based computer network;
a communications interface by which to communicate with a wireless network;
means for providing hypermedia content from the servers to the mobile devices in response to requests from the mobile devices; and
a pull agent to receive a request from a remote application for presence or location information about a mobile device operating on a wireless network, and to send a corresponding request for the presence or location information to a remote entity on the wireless network, wherein the remote entity is not any of the mobile devices, wherein the remote entity responds by providing the presence or location information to the pull agent, and wherein the pull agent subsequently provides the presence or location information to the remote application.

23. A gateway server as recited in claim 22, wherein the remote entity is a Home Location Register (HLR) of the wireless network.

24. A gateway server as recited in claim 23, wherein the pull agent receives the information via a Short Message Service Center (SMSC).

25. A gateway server as recited in claim 24, wherein the SMSC provides the presence or location information to the pull agent in extensible markup language (XML) format using Short Message Peer to Peer Protocol (SMPP).

26. A gateway server as recited in claim 25, wherein the pull agent subsequently provides the presence or location information to the remote application in XML format using Hypertext Transport Protocol (HTTP).

27. A gateway server as recited in claim 22, further comprising a push agent to receive location or presence information about a mobile device operating on the wireless network from the remote entity, wherein the presence or location information received by the push agent is not in response to a specific request for said information, and wherein the push agent subsequently provides the presence or location information to a remote application.

28. A gateway server as recited in claim 27, wherein the push agent communicates with the remote entity according to J-STD-025.

29. A gateway server as recited in claim 28, wherein the push agent provides the presence or location information to a remote application on the computer network in extensible markup language (XML) format using HTTP.

30. A gateway server as recited in claim 22, further comprising a Session Initiation Protocol (SIP) agent to receive location or presence information about a processing device on a network from an SIP server, and to send the location or presence information about the processing device to a remote application on the computer network.

31. A gateway server as recited in claim 30, wherein the SIP agent sends the location or presence information to the remote application in extensible markup language (XML) format using Hypertext Transport Protocol (HTTP).

32. A gateway server as recited in claim 31, wherein the processing device is on an Internet Protocol (IP) based network.

33. An apparatus for providing an application with location and presence information about a mobile device operating on a wireless network, the method comprising:
means for receiving presence or location information about the mobile device from a remote entity; and
means for sending the received presence or location information to a remote application in extensible markup language (XML) format using Hypertext Transport Protocol (HTTP).

34. An apparatus as recited in claim 33, wherein said means for receiving the presence or location information comprises means for receiving the presence or location information in an XML format using Short Message Peer to Peer Protocol (SMPP).

35. An apparatus as recited in claim 34, wherein said means for receiving the presence or location information comprises means for receiving the presence or location information from a Short Message Service Center (SMSC).

36. An apparatus as recited in claim 33, wherein said means for receiving the presence or location information comprises means for receiving the presence or location information from a Home Location Register (HLR) of the wireless network.

37. An apparatus as recited in claim 33, wherein said means for receiving the presence or location information comprises means for receiving the presence or location information from a Session Initiation Protocol (SIP) server by using SIP.

38. An apparatus as recited in claim 33, wherein said means for receiving the presence or location information comprises means for receiving the presence or location information from a General Packet Radio Service (GPRS) server.

39. An apparatus as recited in claim 33, wherein the presence or location information can be received in response to a request for the presence or location information previously transmitted to the remote entity.

40. An apparatus as recited in claim 39, wherein the request for the presence or location information is in response to a prior request from a remote application requiring said information.

41. An apparatus as recited in claim 33, further comprising means for pushing the presence or location information to the remote application independent of any request for said information.

42. An apparatus as recited in claim 41, wherein the presence or location information is pushed to the remote application in a manner compliant with J-STD-025.

43. A method of providing an application with location and presence information about a mobile device operating on a wireless network, the method comprising:
receiving presence or location information about the mobile device from a remote entity; and
in response to receiving the presence or location information, sending the presence or location information to a remote application in extensible markup language (XML) format using Hypertext Transport Protocol (HTTP).

44. A method as recited in claim 43, wherein said receiving the presence or location information comprises receiving the presence or location information in an XML format using Short Message Peer to Peer Protocol (SMPP).

45. A method as recited in claim 44, wherein said receiving the presence or location information comprises receiving the presence or location information from a Short Message Service Center (SMSC).

46. A method as recited in claim 43, wherein said receiving the presence or location information comprises receiving the presence or location information from a Home Location Register (HLR) of the wireless network.

47. A method as recited in claim 43, wherein said receiving the presence or location information comprises receiving the presence or location information from a Session Initiation Protocol (SIP) server by using SIP.

48. A method as recited in claim 43, wherein said receiving the presence or location information comprises receiving the presence or location information from a General Packet Radio Service (GPRS) server.

49. A method as recited in claim 43, wherein the presence or location information can be received in response to a request for the presence or location information previously transmitted to the remote entity.

50. A method as recited in claim 49, wherein the request for the presence or location information is in response to a prior request from a remote application requiring said information.

51. A method as recited in claim 43, wherein the presence or location information is received as push information, not in response to a specific request.

52. A method as recited in claim 51, wherein the presence or location information is received as push information in a manner compliant with J-STD-025.

53. A method of providing an application on a computer network with location and presence information about a mobile device operating on a wireless network, the method comprising:
receiving a first request for presence or location information from an application over the computer network;
in response to the request, sending a second request corresponding to the first request to a Short Message Service Center (SMSC), the SMSC obtaining the requested information in response to the second request by querying a Home Location Register (HLR) of the wireless network;
receiving the requested information from the SMSC;
in response to receiving the requested information from the SMSC, sending the requested information to the application over the computer network.

54. A method as recited in claim 53, wherein said receiving the requested information from the SMSC comprises receiving the requested information in extensible markup language (XML) format using Short Message Peer to Peer Protocol (SMPP).

55. A method as recited in claim 54, wherein said sending the requested information to the application comprises sending the requested information to the application in XML format by using Hypertext Transport Protocol (HTTP).

56. A method of providing an application on a computer network with location and presence information about a mobile device operating on a wireless network, the method comprising:
receiving a first request for presence or location information from an application over the computer network;
in response to the request, sending a second request corresponding to the first request to a Session Initiation Protocol (SIP) server by using SIP, the SIP server obtaining the requested information in response to the second request by using SIP to query a SIP user agent of the processing device;
receiving the requested information from the SIP server by using SIP;
in response to receiving the requested information from the SIP server, sending the requested information to the application over the computer network.

57. A method as recited in claim 56, wherein said sending the requested information to the application over the computer network comprises sending the requested information to the application over the computer network in extensible markup language (XML) format by using Hypertext Transport Protocol (HTTP).
